# FASCICULE DE BREVET EUROPEEN

(11) **EP 1 641 717 B1**
(45) Date de publication et mention de la délivrance du brevet: **09.01.2008**
(21) Numéro de dépôt: 04767297.7
(22) Date de dépôt: 09.06.2004
(51) Int. Cl.: C03C 13/00, C03C 3/087

(54) **FILS DE VERRE APTES A RENFORCER DES MATIERES ORGANIQUES ET/OU INORGANIQUES, COMPOSITES LES RENFERMANT ET COMPOSITION UTILISEE**
GLASFASER ZUM VERSTÄRKEN VON ORGANISCHEN UND/ODER ANORGANISCHEN MATERIALIEN, VERBUNDWERKSTOFFE, DIE DIESE FASERN EINSCHLIESSEN UND VERWENDETE VERBINDUNGEN
GLASS FIBRES FOR REINFORCING ORGANIC AND/OR INORGANIC MATERIALS, COMPOSITES ENCLOSING SAID FIBRES AND USED COMPOUNDS

(30) Priorité: 11.06.2003 FR 0306981
(43) Date de publication de la demande: 05.04.2006
(73) Titulaire: Saint-Gobain Vetrotex France, 73000 Chambéry (FR)
(72) Inventeur: LECOMTE, Emmanuel, F-93300 Bobigny (FR); CREUX, Sophie, NL-2584CA Den Haag (NL)
(74) Mandataire: Jamet, Vincent
(86) Numéro de dépôt international: PCT/FR2004/001431
(87) Numéro de publication internationale: WO 2004/110944

(56) Documents cités:
- US-A- 4 199 364
- US-A1- 2001 011 058

## Description

La présente invention concerne des fils ("ou fibres") de verre "de renforcement", c'est-à-dire aptes à renforcer des matières organiques et/ou inorganiques et utilisables comme fils textiles, ces fils étant susceptibles d'être obtenus par le procédé qui consiste à étirer mécaniquement des filets de verre fondu s'écoulant d'orifices disposés à la base d'une filière généralement chauffée par effet Joule.

La présente invention vise plus précisément des fils de verre ayant un module d'Young spécifique élevé, et présentant une composition quaternaire du type SiO₂-Al₂O₃-CaO-MgO particulièrement avantageuse.

Le domaine des fils de verre de renforcement est un domaine très particulier de l'industrie du verre. Ces fils sont élaborés à partir de compositions de verre spécifiques, le verre utilisé devant pouvoir être étiré sous la forme de filaments de quelques micromètres de diamètre suivant le procédé indiqué précédemment et devant permettre la formation de fils continus aptes à remplir un rôle de renfort.

Dans certaines applications notamment aéronautiques, on cherche à obtenir des pièces de grande dimension aptes à fonctionner dans des conditions dynamiques et qui par conséquent sont aptes à résister à des contraintes mécaniques élevées. Ces pièces sont le plus souvent à base de matières organiques et/ou inorganiques et d'un renfort, par exemple sous forme de fils de verre, qui occupe en général plus de 50 % du volume.

L'amélioration des propriétés mécaniques et du rendement de telles pièces passe par une amélioration des performances mécaniques du renfort, notamment du module d'Young à densité de renfort p constante, voire plus faible, ce qui revient à augmenter le module d'Young spécifique (E/p).

Les propriétés du renfort, dans le cas des fils de renforcement en verre, sont principalement régies par la composition du verre qui les constitue. Les fils de verre les plus connus pour renforcer des matières organiques et/ou inorganiques sont constitués de verres E et R.

Les fils en verre E sont couramment employés pour former des renforts, soit tels quels soit sous forme de tissus. Les conditions dans lesquelles le verre E peut être fibré sont très avantageuses : la température de travail correspondant à la température à laquelle le verre a une viscosité proche de 1000 poises est relativement basse, de l'ordre de 1200°C, la température de liquidus est inférieure d'environ 120°C à la température de travail et sa vitesse de dévitrification est faible.

La composition du verre E définie dans la norme ASTM D 578-98 pour les applications dans les domaines de l'électronique et de l'aéronautique est la suivante (en pourcentage pondéral) : 52 à 56 % de SiO₂; 12 à 16 % d'Al₂O₃; 16 à 25 % de CaO; 5 à 10 % de B₂O₃; 0 à 5 % de MgO; 0 à 2 % de Na₂O + K₂O; 0 à 0,8 % de TiO₂; 0,05 à 0,4 % de Fe₂O₃; 0 à 1 % de F₂.

Néanmoins, le verre E présente un module d'Young spécifique de l'ordre de 33 MPa.kg⁻¹.m³ insuffisant pour l'application visée.

Dans la norme ASTM D 578-98, il est décrit d'autres fils de renforcement de verre E, éventuellement sans bore. Ces fils ont la composition suivante (en pourcentage pondéral) : 52 à 62 % de SiO₂; 12 à 16 % d'Al₂O₃; 16 à 25 % de CaO; 0 à 10 % de B₂O₃; 0 à 5 % de MgO; 0 à 2 % de Na₂O + K₂O; 0 à 1,5 % de TiO₂; 0,05 à 0,8 % de Fe₂O₃; 0 à 1 % de F₂.

Les conditions de fibrage du verre E sans bore sont moins bonnes que celles du verre E avec bore mais elles restent cependant acceptables économiquement. Le module d'Young spécifique demeure à un niveau de performance équivalent à celui du verre E.

Il est encore connu de US 4 199 364 un verre E sans bore et sans fluor qui présente une tension à la rupture améliorée. Ce verre contient notamment de l'oxyde de lithium.

Le verre R est connu pour ses propriétés mécaniques élevées et présente un module d'Young spécifique de l'ordre de 35,9 MPa.kg⁻¹.m³. En revanche, les conditions de fusion et de fibrage sont plus contraignantes que pour les verres du type E mentionnés, et donc son coût final est plus élevé.

La composition du verre R est donnée dans FR-A-1 435 073. Elle est la suivante (en pourcentage pondéral) : 50 à 65 % de SiO₂; 20 à 30 % d'Al₂O₃; 2 à 10 % de CaO; 5 à 20 % de MgO; 15 à 25 % de CaO + MgO; SiO₂/Al₂O₃ = 2 à 2,8; MgO/ SiO₂ < 0,3.

D'autres tentatives d'augmenter la résistance mécanique des fils de verre ont été faites mais généralement au détriment de leur aptitude au fibrage, la mise en oeuvre devenant alors plus difficile ou imposant d'avoir à modifier les installations de fibrage existantes.

Il existe donc un besoin de disposer de fils de verre de renforcement ayant un coût aussi proche que possible de celui du verre E et présentant des propriétés mécaniques à un niveau de performance comparable à celui du verre R.

La présente invention a pour but de fournir des fils de verre de renfort continus dont les propriétés mécaniques sont du même ordre de grandeur que le verre R, en particulier concernant le module d'Young spécifique, tout en présentant des propriétés de fusion et de fibrage satisfaisantes pour obtenir des fils de renforcement dans des conditions économiques.

Un autre but de l'invention est de fournir des fils de verre économique ne contenant pas d'oxyde de lithium.

Ces buts sont atteints grâce aux fils de verre dont la composition comprend essentiellement les constituants suivants dans les limites définies ci-après exprimées en pourcentages pondéraux :

| | |
|---|---|
| SiO₂ | 50 - 65 % |
| Al₂O₃ | 12 - 20% |
| CaO | 13 - 16 % |
| MgO | 6 - 12 % |
| B₂O₃ | 0 - 3 % |
| TiO₂ | 0 - 3 % |
| Na₂O + K₂O | < 2 % |
| F₂ | 0 - 1 % |
| Fe₂O₃ | < 1 % |

La silice SiO₂ est l'un des oxydes qui forme le réseau des verres selon l'invention et joue un rôle essentiel pour leur stabilité. Dans le cadre de l'invention, lorsque le taux de silice est inférieur à 50 %, la viscosité du verre devient trop faible et les risques de dévitrification lors du fibrage sont augmentés. Au-delà de 65 %, le verre devient très visqueux et difficile à fondre. De préférence, le taux de silice est compris entre 56 et 61 %.

L'alumine Al₂O₃ constitue également un formateur du réseau des verres selon l'invention et joue un rôle essentiel à l'égard du module, combiné avec la silice. Dans le cadre des limites définies selon l'invention, la diminution du pourcentage de cet oxyde au-dessous 12 % entraîne une augmentation de la température de liquidus alors qu'une trop forte augmentation du pourcentage de cet oxyde au-delà de 20 % entraîne des risques de dévitrification et une augmentation de la viscosité. De préférence, la teneur en alumine des compositions sélectionnées est compris entre 14 et 18 %. De manière avantageuse, la somme des teneurs en silice et en alumine est supérieure à 70 %, ce qui permet d'obtenir des valeurs intéressantes du module d'Young spécifique.

La chaux CaO permet d'ajuster la viscosité et de contrôler la dévitrification des verres. La teneur en CaO est de préférence comprise entre 13 et 16 %.

La magnésie MgO, tout comme CaO, joue le rôle de fluidifiant et a aussi un effet bénéfique sur le module d'Young spécifique. La teneur en MgO est comprise entre 6 et 12 %, de préférence entre 8 et 10 %. De préférence, le rapport pondéral CaO/MgO est supérieur ou égal à 1,40, et de manière avantageuse est inférieur ou égal à 1,8.

De préférence encore, la somme des teneurs en Al₂O₃ et en MgO est supérieure ou égale à 24 %, ce qui permet d'obtenir des valeurs du module d'Young spécifique tout à fait satisfaisantes et de bonnes conditions de fibrage.

L'oxyde de bore B₂O₃ joue le rôle de fluidifiant. Sa teneur dans la composition de verre selon l'invention est limitée à 3 %, de préférence 2 %, pour éviter les problèmes de volatilisation et d'émission de polluants.

L'oxyde de titane joue un rôle de fluidifiant et contribue à augmenter le module d'Young spécifique. Il peut être présent à titre d'impureté (son taux dans la composition est alors de 0 à 0,6 %) ou être ajouté volontairement. Dans ce dernier cas, l'emploi de matières premières inhabituelles est nécessaire ce qui augmente le coût de la composition. Dans le cadre de la présente invention, l'ajout délibéré de TiO₂ n'est avantageux que pour une teneur inférieure à 3 %, de préférence inférieure à 2 %.

Na₂O et K₂O peuvent être introduits dans la composition selon l'invention pour contribuer à limiter la dévitrification et réduire éventuellement la viscosité du verre. La teneur en Na₂O et K₂O doit cependant rester inférieure à 2 % pour éviter une diminution pénalisante de la résistance hydrolytique du verre. De préférence, la composition comprend moins de 0,8 % de ces deux oxydes.

Du fluor F₂ peut être présent dans la composition pour aider à la fusion du verre et au fibrage. Néanmoins, sa teneur est limitée à 1 % car au-delà peuvent survenir des risques d'émissions polluantes et de corrosion des réfractaires du four.

Les oxydes de fer (exprimés sous forme de Fe₂O₃) sont généralement présents à titre d'impuretés dans la composition selon l'invention. Le taux de Fe₂O₃ doit rester inférieur à 1 %, de préférence inférieur à 0,8 % pour ne pas nuire de façon rédhibitoire à la couleur des fils et à la conduite de l'installation de fibrage, en particulier aux transferts de chaleur dans le four.

Les fils de verre conformes à l'invention sont exempts d'oxyde de lithium. Outre son coût élevé, cet oxyde a un impact négatif sur la résistance hydrolytique du verre.

De préférence, les fils de verre ont une composition comprenant essentiellement les constituants suivants dans les limites définies ci-après exprimées en pourcentages pondéraux :

| | |
|---|---|
| SiO₂ | 56 - 61 % |
| Al₂O₃ | 14 - 18 % |
| CaO | 13 - 16 % |
| MgO | 8 - 10 % |
| B₂O₃ | 0 - 2 % |
| TiO₂ | 0 - 2 % |
| Na₂O + K₂O | < 0,8 % |
| F₂ | 0-1 % |
| Fe₂O₃ | < 0,8 % |

De manière particulièrement avantageuse, les compositions présentent un rapport pondéral Al₂O₃/(Al₂O₃+CaO+MgO) qui varie de 0,4 à 0,44, de préférence inférieur à 0,42 ce qui permet d'obtenir des verres ayant une température de liquidus inférieure ou égale à 1250°C.

Les fils de verre selon l'invention sont obtenus à partir des verres de composition précédemment décrite selon le procédé suivant : on étire une multiplicité de filets de verre fondu, s'écoulant d'une multiplicité d'orifices disposés à la base d'une ou plusieurs filières, sous la forme d'une ou plusieurs nappes de fils continus, puis on rassemble les filaments en un ou plusieurs fils que l'on collecte sur un support en mouvement. Il peut s'agir d'un support en rotation lorsque les fils sont collectés sous la forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus ou coupés, tresses, rubans ou mats, ces fils étant composés de filaments de diamètre pouvant aller de 5 à 30 micromètres environ.

Le verre fondu alimentant les filières est obtenu à partir de matières premières pures ou le plus souvent naturelles (c'est-à-dire pouvant contenir des impuretés à l'état de traces), ces matières étant mélangées dans des proportions appropriées, puis étant fondues. La température du verre fondu est réglée de façon traditionnelle de manière à permettre le fibrage et éviter les problèmes de dévitrification. Avant leur rassemblement sous forme de fils, les filaments sont généralement revêtus d'une composition d'ensimage visant à les protéger de l'abrasion et facilitant leur association ultérieure avec les matières à renforcer.

Les composites obtenus à partir des fils selon l'invention comprennent au moins une matière organique et/ou au moins une matière inorganique et des fils de verre, une partie au moins des fils étant des fils selon l'invention.

Les exemples qui suivent permettent d'illustrer l'invention sans toutefois la limiter.

Des fils de verre composés de filaments de verre de 17 µm de diamètre sont obtenus par étirage de verre fondu ayant la composition figurant dans le tableau 1, exprimée en pourcentages pondéraux.

On note T(log η=3) la température à laquelle la viscosité du verre est égale à 10³ poises (déciPascal seconde).

On note T_{liquidus} la température de liquidus du verre, correspondant à la température à laquelle la phase la plus réfractaire, qui peut dévitrifier dans le verre, a une vitesse de croissance nulle et correspond ainsi à la température de fusion de cette phase dévitrifiée.

On reporte les valeurs du module d'Young spécifique correspondant au rapport du module d'Young (mesuré selon la norme ASTM C 1259-01) à la masse volumique de l'échantillon de verre utilisé pour la mesure.

On donne à titre d'exemples comparatifs les mesures pour des verres E et R.

Il apparaît que les exemples selon l'invention présentent un excellent compromis entre les propriétés de fusion et de fibrage et les propriétés mécaniques. Ces propriétés de fibrage sont particulièrement avantageuses, notamment avec une température de liquidus au plus égale à 1280°C, plus faible que celle du verre R. La plage de fibrage est positive, avec notamment un écart entre T(log η=3) et T_{liquidus} de l'ordre d'environ 10 à 50°C.

Le module d'Young spécifique des compositions selon l'invention est du même ordre de grandeur que celui du verre R et nettement plus élevé que pour le verre E.

Avec les verres selon l'invention, on atteint ainsi de manière remarquable des propriétés mécaniques du même niveau que pour le verre R, tout en abaissant substantiellement la température de fibrage pour se rapprocher de la valeur obtenue pour le verre E.

Les fils de verre selon l'invention sont plus économiques que les fils de verre R qu'ils peuvent remplacer avantageusement dans certaines applications, notamment aéronautiques ou pour le renforcement de pales d'hélicoptères ou de câbles optiques.

**TABLEAU 1**

| | Ex. 1 | Ex. 2 | Ex. 3 | Ex. 4 | Ex. 5 | Ex. 6 | Ex. 7 | Verre E | Verre R |
|---|---|---|---|---|---|---|---|---|---|
| SiO₂ | 59,5 | 58,8 | 58,0 | 57,7 | 57,5 | 58,5 | 59,5 | 54,4 | 60,0 |
| Al₂O₃ | 15,9 | 17,0 | 17,9 | 16,0 | 16,0 | 16,9 | 16,2 | 14,5 | 25,0 |
| CaO | 14,8 | 14,6 | 14,4 | 14,8 | 14,9 | 13,3 | 13,8 | 21,2 | 9,0 |
| MgO | 8,8 | 8,6 | 8,5 | 8,7 | 8,8 | 10,0 | 9,5 | 0,3 | 6,0 |
| B₂O₃ | | | | 1,8 | | | | 7,3 | |
| TiO₂ | 0,1 | 0,1 | 0,2 | 0,1 | 2,0 | 0,1 | 0,1 | | |
| Na₂O | 0,1 | 0,1 | 0,1 | 0,1 | 0,1 | 0,1 | 0,1 | 0,6 | |
| K₂O | 0,5 | 0,5 | 0,6 | 0,5 | 0,5 | 0,5 | 0,5 | | |
| T(log η=3) (°C) T_{liquidus} (°C) | 1281 1230 | 1285 1260 | 1289 1280 | 1254 1220 | 1271 1240 | 1292 1250 | 1298 1210 | 1203 1080 | 1410 1330 |
| Module d'Young spécifique (MPa.kg⁻¹.m³₎ | 35,2 | 35,4 | 35,4 | 35,4 | 35,6 | 35,8 | 35,6 | 33,0 | 35,9 |

## Revendications

1. Fil de verre de renforcement dont la composition comprend essentiellement les constituants suivants dans les limites définies ci-après exprimées en pourcentages pondéraux :
| | |
|---|---|
| SiO₂ | 50 - 5 % |
| Al₂O₃ | 12 - 20 % |
| CaO | 13 - 16 % |
| MgO | 6 - 12 % |
| B₂O₃ | 0 - 3 % |
| TiO₂ | 0 - 3 % |
| Na₂O + K₂O | < 2 % |
| F₂ | 0 - 1 % |
| Fe₂O₃ | < 1 % |
| Li₂O | 0 % |

2. Fil de verre selon la revendication 1, **caractérisé en ce que** la composition comprend une teneur en MgO + Al₂O₃ supérieure à 24 %.

3. Fil de verre selon l'une des revendications 1 ou 2, **caractérisé en ce que** la composition comprend une teneur en SiO₂ + Al₂O₃ supérieure ou égale à 70 %.

4. Fil de verre selon l'une des revendications 1 à 3, **caractérisé en ce que** la composition présente un rapport pondéral Al₂O₃/(Al₂O₃+CaO+MgO) variant de 0,40 à 0,44, de préférence inférieur à 0,42.

5. Fil de verre selon l'une des revendications 1 à 4, **caractérisé en ce que** la composition présente un rapport pondéral CaO/MgO supérieur ou égal à 1,40, et de préférence inférieur ou égal à 1,8.

6. Fil de verre selon l'une des revendications 1 à 5, **caractérisé en ce que** la composition comprend essentiellement les constituants suivants :
| | |
|---|---|
| SiO₂ | 56 - 61 % |
| Al₂O₃ | 14 - 18 % |
| CaO | 13 - 16 % |
| MgO | 8 - 10 % |
| B₂O₃ | 0 - 2 % |
| TiO₂ | 0 - 2 % |
| Na₂O + K₂O | < 0,8 % |
| F₂ | 0 - 1 % |
| Fe₂O₃ | < 0,8 %. |

7. Composite de fils de verre et de matière(s) organique(s) et/ou inorganique(s), **caractérisé en ce qu'**il comprend des fils de verres tels que définis par l'une des revendications 1 à 6.

8. Composition de verre adaptée à la réalisation de fils de verre de renforcement comprenant essentiellement les constituants suivants dans les limites définies ci-après exprimées en pourcentages pondéraux :
| | |
|---|---|
| SiO₂ | 50 - 65 % |
| Al₂O₃ | 12 - 20 % |
| CaO | 13 - 16 % |
| MgO | 6 - 12 % |
| B₂O₃ | 0 - 3 % |
| TiO₂ | 0 - 3 % |
| Na₂O + K₂O | < 2 % |
| F₂ | 0 - 1 % |
| Fe₂O₃ | < 1 % |
| Li₂O | 0 % |

## Claims

1. A glass reinforcing yarn, the composition of which essentially comprises the following constituents, within the limits defined below, expressed in percentages by weight:
| | |
|---|---|
| SiO₂ | 50 - 65% |
| Al₂O₃ | 12 - 20% |
| CaO | 13 - 16% |
| MgO | 6 - 12% |
| B₂O₃ | 0 - 3% |
| TiO₂ | 0 - 3% |
| Na₂O + K₂O | < 2% |
| F₂ | 0 - 1% |
| Fe₂O₃ | < 1 % |
| Li₂O | 0 %. |

2. The glass yarn as claimed in claim 1, **characterized in that** the composition has an MgO + Al₂O₃ content of greater than 24%.

3. The glass yarn as claimed in either of claims 1 and 2, **characterized in that** the composition has an SiO₂ + Al₂O₃ content of greater than or equal to 70%.

4. The glass yarn as claimed in one of claims 1 to 3, **characterized in that** the composition has an Al₂O₃/(Al₂O₃+CaO+MgO) weight ratio that varies from 0.40 to 0.44 and is preferably less than 0.42.

5. The glass yarn as claimed in one of claims 1 to 4, **characterized in that** the composition has a CaO/MgO weight ratio of greater than or equal to 1.40 and preferably less than or equal to 1.8.

6. The glass yarn as claimed in one of claims 1 to 5, **characterized in that** the composition essentially comprises the following constituents:
| | |
|---|---|
| SiO₂ | 56 - 61% |
| Al₂O₃ | 14 - 18% |
| CaO | 13 - 16% |
| MgO | 8 - 10% |
| B₂O₃ | 0 - 2% |
| TiO₂ | 0 - 2% |
| Na₂O + K₂O | < 0.8% |
| F₂ | 0 - 1%. |
| Fe₂O₃ | < 0.8%. |

7. A composite consisting of glass yarns and one or more organic and/or inorganic materials, **characterized in that** it comprises glass yarns as defined by one of claims 1 to 6.

8. A glass composition suitable for producing glass reinforcing yarns, which essentially comprises the following constituents, within the limits defined below, expressed in percentages by weight:
| | |
|---|---|
| SiO₂ | 50 - 65% |
| Al₂O₃ | 12 - 20% |
| CaO | 13 - 16% |
| MgO | 6 - 12% |
| B₂O₃ | 0 - 3% |
| TiO₂ | 0 - 3% |
| Na₂O + K₂O | < 2% |
| F₂ | 0 - 1% |
| Fe₂O₃ | < 1% |
| Li₂O | 0 %. |

## Patentansprüche

1. Verstärkender Glasfaden, dessen Zusammensetzung im Wesentlichen folgende Bestandteile innerhalb nachstehender in prozentualen Gewichtsanteilen angegebenen Grenzen umfasst:
| | | | |
|---|---|---|---|
| SiO₂ | 50 | bis | 65 % |
| Al₂O₃ | 12 | bis | 20 % |
| CaO | 13 | bis | 16 % |
| MgO | 6 | bis | 12 % |
| B₂O₃ | 0 | bis | 3 % |
| TiO₂ | 0 | bis | 3 % |
| Na₂O + K₂O | | | < 2 % |
| F₂ | 0 | bis | 1 % |
| Fe₂O₃ | | | < 1 % |
| Li₂O | | | 0 %. |

2. Glasfaden nach Anspruch 1, **dadurch gekennzeichnet, dass** die Zusammensetzung einen Gehalt an MgO + Al₂O₃ von mehr als 24 % umfasst.

3. Glasfaden nach Anspruch 1 oder 2, **dadurch gekennzeichnet, dass** die Zusammensetzung einen Gehalt an SiO₂ + Al₂O₃ von mehr als oder gleich 70 % umfasst.

4. Glasfaden nach einem der Ansprüche 1 bis 3, **dadurch gekennzeichnet, dass** die Zusammensetzung ein Gewichtsverhältnis von Al₂O₃/(Al₂O₃ + CaO + MgO) von 0,40 bis 0,44 und vorzugsweise von weniger als 0,42 aufweist.

5. Glasfaden nach einem der Ansprüche 1 bis 4, **dadurch gekennzeichnet, dass** die Zusammensetzung ein Gewichyverhältnis von CaO/MgO von mehr als oder gleich 1,40 und vorzugsweise von weniger als oder gleich 1,8 aufweist.

6. Glasfaden nach einem der Ansprüche 1 bis 5, **dadurch gekennzeichnet, dass** die Zusammensetzung im Wesentlichen folgende Bestandteile umfasst:
| | | | |
|---|---|---|---|
| SiO₂ | 56 | bis | 61 % |
| Al₂O₃ | 14 | bis | 18 % |
| CaO | 13 | bis | 16 % |
| MgO | 8 | bis | 10 % |
| B₂O₃ | 0 | bis | 2 % |
| TiO₂ | 0 | bis | 2 % |
| Na₂O + K₂O | | | < 0,8 % |
| F₂ | 0 | bis | 1 % |
| Fe₂O₃ | | | < 0,8 %. |

7. Verbundwerkstoff aus Glasfäden und einem oder mehreren organischen und/oder anorganischen Materialien, **dadurch gekennzeichnet, dass** er wie von einem der Ansprüche 1 bis 6 definierte Glasfäden umfasst.

8. Glaszusammensetzung, die fiir die Herstellung verstärkender Glasfäden geeignet ist und im Wesentlichen folgende Bestandteile innerhalb nachstehender in prozentualen Gewichtsanteilen angegebenen Grenzen umfasst:
| | | | |
|---|---|---|---|
| SiO₂ | 50 | bis | 65 % |
| Al₂O₃ | 12 | bis | 20 % |
| CaO | 13 | bis | 16 % |
| MgO | 6 | bis | 12 % |
| B₂O₃ | 0 | bis | 3 % |
| TiO₂ | 0 | bis | 3 % |
| Na₂O + K₂O | | | < 2 % |
| F₂ | 0 | bis | 1 % |
| Fe₂O₃ | | | < 1 % |
| Li₂O ; | | | 0 %. |
